# EUROPÄISCHE PATENTSCHRIFT

(11) **EP 2 889 436 B1**
(45) Veröffentlichungstag und Bekanntmachung des Hinweises auf die Patenterteilung: **31.01.2018**
(21) Anmeldenummer: 14190280.9
(22) Anmeldetag: 24.10.2014
(51) Int. Cl.: E04B 1/76

(54) **Dübel**
Dowel
Cheville

(30) Priorität: 30.12.2013 DE 102013114985
(43) Veröffentlichungstag der Anmeldung: 01.07.2015
(73) Patentinhaber: Klimas Sp.z.o.o., 42-233 Mykanow (PL)
(72) Erfinder: Klimas, Wojciech, 42233 Mykanòw (PL)
(74) Vertreter: Herrmann, Jochen

(56) Entgegenhaltungen:
- EP-A2- 1 357 301
- EP-A2- 1 818 477
- DE-A1- 10 134 734
- DE-A1- 10 159 632
- DE-U1-202007 019 571

## Beschreibung

Die Erfindung betrifft einen Dübel zur Montage eines Dämmstoffelements an einer Unterkonstruktion mit einem Druckteil und einer Dübelhülse, wobei das Druckteil mit der Dübelhülse in einer Vormontagestellung mit einem Spreizelement verbunden ist, und wobei das Druckteil einen Druckteller aufweist, der mit einer Schneidvorrichtung mit einem oder mehreren Schneidelementen ausgestattet ist.

Ein derartiger Dübel ist aus der DE 101 59 632 B4 bekannt.

Zur Aufbringung eines Wärmeschutzes auf einer Unterkonstruktion, bspw. einem Mauerwerk eines Hauses wird zunächst eine Verbindungsschicht auf das Mauerwerk außenseitig aufgebracht. Bei der Verbindungsschicht handelt es sich meist um eine Klebeschicht bestehend aus einem hochfesten Kleber. Die Verbindungsschicht dient zur Verbindung des Dämmstoffelements mit der Unterkonstruktion. Um nun eine zusätzliche Fixierung des Dämmstoffelements zu erreichen werden Schraubverbindungen vorgesehen. Hierzu werden Bohrungen in das Dämmstoffelement und die Unterkonstruktion eingebracht. In diese Bohrungen werden Dübel eingesteckt. Ein Spreizelement des Dübels kann dann mit einem Schraubwerkzeug in den Dübel eingedreht werden. Dabei wird die Spreizzone des Dübels aufgeweitet. Die aus der DE 10 159 632 B4 bekannten Dübel weisen nun im Bereich des Druckteils eine Rastaufnahme auf. In diese kann ein Rastelement des Schraubwerkzeugs während des Schraubvorgangs eingreifen. Dann wird das Druckteil drehfest mit dem Schraubwerkzeug verbunden. Das Druckteil kann dann zusammen mit dem Drehwerkzeug rotieren. Mittels einer Schneidvorrichtung am äußeren Umfangsrand des Druckteils wird dann ein Schneidvorgang durchgeführt. Hierbei schneidet sich das Druckteil in die Oberfläche des Dämmstoffelements ein.

Auf diese Weise wird eine versenkte Montage des Druckteils möglich. Um eine definierte Einschraubtiefe erreichen zu können, ist am Drehwerkzeug ein Anschlag vorhanden. Bei diesen bekannten Dübeln muss stets ein Spezialwerkzeug verwendet werden, um die Rastverbindung zwischen dem Drehwerkzeug und dem Druckteil herstellen zu können. Es hat sich gezeigt, dass sich während des Einschraubvorgangs das Rastelement nicht immer sofort exakt mit der Rastaufnahme des Druckteils findet, was zu einer gewissen Montageunsicherheit führt.

Aus EP 1 818 477 A2 ist ein Dübel zur Montage eines Dämmstoffelements an einer Unterkonstruktion bekannt. Der Dübel weist einen Druckteil und eine Dübelhülse auf, wobei das Druckteil mit der Dübelhülse in einer Vormontagestellung mit einem Spreizelement verbunden ist. Das Spreizelement ist in Form einer Schraube ausgebildet und wird in einer Vergussmasse am Druckteil gehalten. Der Kopf des Spreizelements ist axial unverschiebbar und drehfest am Druckteil gehalten.

Es ist Aufgabe der Erfindung, einen Dübel der eingangs erwähnten Art bereitzustellen, mit dem ein verbessertes Montageverhalten gewährleistet werden kann.

Diese Aufgabe wird mit den Merkmalen des Anspruches 1 gelöst.

Erfindungsgemäß ist es mithin vorgesehen, dass die Dübelhülse mit ihrem Führungselement in eine Führung des Druckteils eingesetzt ist, und dass der Kopf des Spreizelements die axiale Verstellung der Dübelhülse begrenzt, wobei die Dübelhülse in der Endmontagestellung an der Unterseite des Kopfs anschlägt.

Üblicherweise werden die Dübel mit einer Setzvorrichtung montiert, wobei am Schraubwerkzeug ein Anschlag vorgesehen ist, der die Einschraubbewegung des Druckteils in die Dübelhülse begrenzt. Wie bereits oben erwähnt, kann dabei ein Aufsatzteil auf der Außenoberfläche des Dämmstoffelements während des Schraubvorgangs in bekannter Weise aufsetzen. Erfindungsgemäß ist es nun vorgesehen, dass der Kopf des Spreizelements die Axialverstellung der Dübelhülse begrenzt. Auf diese Weise wird dem Monteur auf einfacher Weise signalisiert, dass die maximale Einschraubposition erreicht ist.

Über die erfindungsgemäße drehfeste Verbindung des Kopfs mit dem Druckteil wird letztlich auch das Spreizelement drehfest am Druckteil festgelegt. Auf diese Weise kann auch unter Verwendung von handelsüblichen Schraubwerkzeugen eine Montage des Dübels durchgeführt werden. Zudem kann die Montage deutlich vereinfacht werden, da bereits eine drehfeste Verbindung zwischen Spreizelement und Druckteil vorliegt und auf ein "Finden" einer drehfesten Verbindung während des Schraubvorgangs sich nicht verlassen werden muss.

Gemäß einer bevorzugten Erfindungsvariante kann es vorgesehen sein, dass das Druckteil eine Steckaufnahme mit einer Verdrehsicherung aufweist, und dass der Kopf in die Steckaufnahme eingesetzt und an der Verdrehsicherung gehalten ist. Auf diese Weise wird eine einfache Montage des Dübels möglich. Insbesondere kann die vorbereitete Vormontagestellung mit dieser Maßnahme einfach generiert werden. Insbesondere in Verbindung mit der axial unverschiebbaren Lagerung des Kopfs wird eine definierte Zuordnung des Spreizelements zu der Dübelhülse erreicht.

Dabei gelingt eine konstruktiv einfache Auslegung des Dübels dann, wenn vorgesehen ist, dass im Bereich der Steckaufnahme ein Anschlag vorgesehen ist, an dem der Kopf in Achsrichtung unverschiebbar gehalten ist. Während des Einschraubvorgangs wird der Kopf dabei gegen den Anschlag gezogen. Eine platz-und materialsparende Auslegung des Dübels kann dadurch erreicht werden, dass die Steckaufnahme von einem Drucktellerschaft gebildet ist, der einteilig an dem Druckteller angeformt ist.

Wenn vorgesehen ist, dass die Schneidvorrichtung ein umlaufendes Schneidelement aufweist, das im Bereich des äußeren Umfangsrands des Drucktellers angeordnet ist, dann kann mit der umlaufenden Schneidkante ein sauberer Schnitt im Dämmstoffelement erreicht werden, wobei wenig Material aus der Dämmung ausgefräst wird, welche zu einer Verunreinigung führen würde. Das Material des Dämmstoffs unterhalb des Drucktellers wird während des Schneidvorgangs gleichzeitig komprimiert.

Denkbar ist es auch, dass anstatt eines umlaufenden Schneidelements am äußeren Umfangsrand des Drucktellers eine Schneidvorrichtung mit mehreren Schneidelementen, bspw. Schneidzähnen angeordnet ist.

Besonders bevorzugt ist es nach einer Erfindungsvariante vorgesehen, dass das Druckteil eine Führung aufweist, die mit einem Führungselement der Dübelhülse in Form einer Dreh-Schiebelagerung zusammenarbeitet. Diese kombinierte Dreh-Schiebelagerung gewährleistet zum einen eine gelagerte Verdrehung des Druckteils gegenüber der Dübelhülse, die einen sauberen Schnitt in das Dämmstoffmaterial unterstützt. Die Schiebelagerung gewährleistet zum anderen gleichzeitig das axiale Einziehen des Druckteils in den Dämmstoff während des Schneidvorgangs. Die Dreh-Schiebelagerung kann dabei in einfacher Ausgestaltung von einem Außen- und einem Innenzylinder gebildet sein. Dabei ist der Außenzylinder in Umfangsrichtung frei drehbar und in Achsrichtung verstellbar an dem Innenzylinder geführt.

Eine besonders bevorzugte Erfindungsausgestaltung ist derart, dass die Verlängerung axial in Richtung auf das Druckteil beabstandet zu der Spreizzone wenigstens ein außen abstehendes Verankerungselement aufweist, das derart angeordnet und ausgebildet ist, dass es zur Verankerung in einer Verbindungsschicht zwischen Dämmstoffelement und Unterkonstruktion dient. Bei dieser Dübelausführung wird die Dübelhülse zunächst in ihrer vorbereiteten Vormontagestellung in das Bohrloch eingesteckt. Dabei gelangen die Verankerungselemente in den Bereich der Verbindungsschicht. Die Verankerungselemente sind dabei so ausgebildet, dass sie sich in der Verankerungsschicht festsetzen. Wird der Dübel in einem massiven Mauerwerk eingesetzt, so reicht üblicherweise die Verspannung zwischen der Spreizzone und dem Mauerwerk aus, um eine drehfeste Verbindung zwischen der Dübelhülse und dem Mauerwerk herzustellen. Diese verdrehfeste Festlegung ist erforderlich um ein Einschrauben des Spreizelements in die Dübelhülse zu ermöglichen. Wird nun aber eine Unterkonstruktion verwendet, bei der die verdrehfeste Festlegung der Spreizzone in der Unterkonstruktion nicht eindeutig gewährleistet ist, so kommen die Verankerungselemente zum Funktionseinsatz. Die Erfindung macht sich dabei die Erkenntnis zu Nutze, dass die Verbindungsschicht eine hochtragfähige Komponente darstellt. Die Verankerungselemente, die sich in der Verbindungsschicht festsetzen verhindern ein Rotieren der Dübelhülse während des Einschraubvorgangs. Damit ist unabhängig von der gewählten Unterkonstruktion stets eine zuverlässige Dübelmontage gewährleistet.

Wenn vorgesehen ist, dass das Verankerungselement sich pfeilförmig in Richtung auf das freie Ende der Dübelhülse hin verjüngt, so wird ein zuverlässiges Verkrallen des Verankerungselements in der Verbindungsschicht beim Einstecken des Dübels gewährleistet.

Die Erfindung wird im Folgenden anhand von in den Zeichnungen dargestellten Ausführungsbeispielen näher erläutert. Es zeigen:
- Fig. 1: in perspektivischer Seitenansicht einen Dübel mit einem Druckteil und einer Dübelhülse,
- Fig. 2: das Druckteil gem. Fig. 1 in perspektivischer Ansicht,
- Fig. 3: das Druckteil gem. Fig. 2 in Seitenansicht,
- Fig. 4: das Druckteil gem. den Fig. 2 und 3 längs des in Fig. 3 mit IV-IV markierten Schnittverlaufs,
- Fig. 5: die Dübelhülse gem. Fig. 1 in Seitenansicht,
- Fig. 6: die Dübelhülse gem. Fig. 5 längs des in Fig. 5 mit VI-VI markierten Schnittverlaufs,
- Fig. 7 bis 9: verschiedene Montagestellungen des Dübels gem. Fig. 1 in Seitenansicht und im Schnitt, und
- Fig. 10: eine alternative Ausgestaltungsvariante eines Dübels mit einem Druckteil und einer Dübelhülse.

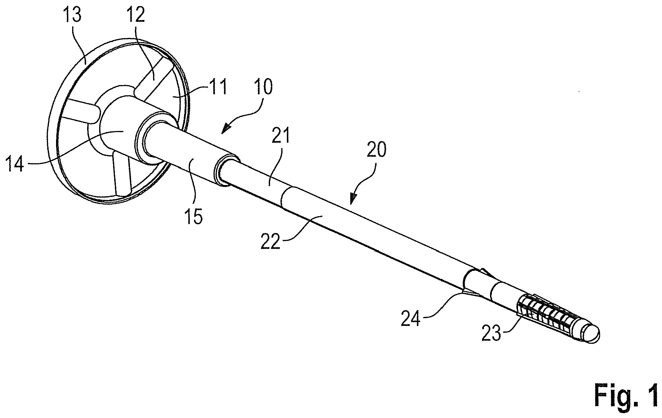

Fig. 1 zeigt einen Dübel mit einem Druckteil 10 und einer Dübelhülse 20 in einer vorbereiteten Vormontagestellung.

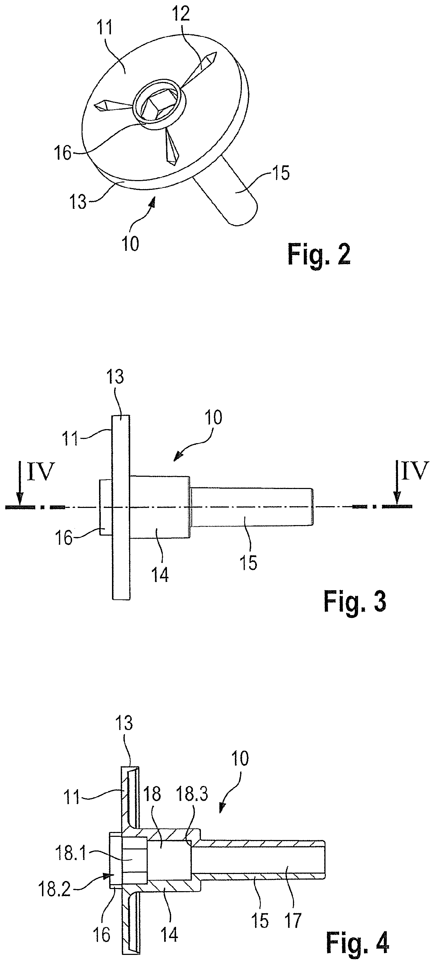

Wie die Fig. 2 bis 4 erkennen lassen, weist das Druckteil 10 einen Druckteller 11 mit einem daran angeformten Drucktellerschaft 14 auf. Das Druckteil 10 ist als Kunststoffspritzgussteil ausgebildet. An den Drucktellerschaft 14 ist eine hülsenförmige Führung 15 angeformt. Der Druckteller 11 weist auf seiner Unterseite angeformte rippenförmige Verstärkungen 12 auf. Am Umfangsrand des Drucktellers 12 ist eine Schneidvorrichtung in Form eines umlaufenden Schneidelements 13 vorgesehen. Wie Fig. 4 erkennen lässt, ist das Schneidelement 13 rippenförmig ausgebildet und verjüngt sich ausgehend von seiner Anbindungsstelle an den Druckteller 11 zur Bildung einer Schneidkante. Auf der Oberseite des Drucktellers 13 ist ein ringförmiges Fixierelement 16 angeordnet. Fig. 4 lässt das Druckteil 10 im Querschnitt deutlich erkennen. Wie diese Darstellung zeigt, ist in den Drucktellerschaft 14 eine Steckaufnahme 18 eingebracht. Im Bereich des Drucktellers 13 befindet sich eine Verdrehsicherung 18.1 der Steckaufnahme 18. Diese Verdrehsicherung 18.1 ist in Form eines Innensechskants ausgebildet. Die Steckaufnahme 18 weist weiterhin der Führung 15 zugekehrt einen Anschlag 18.3 auf.

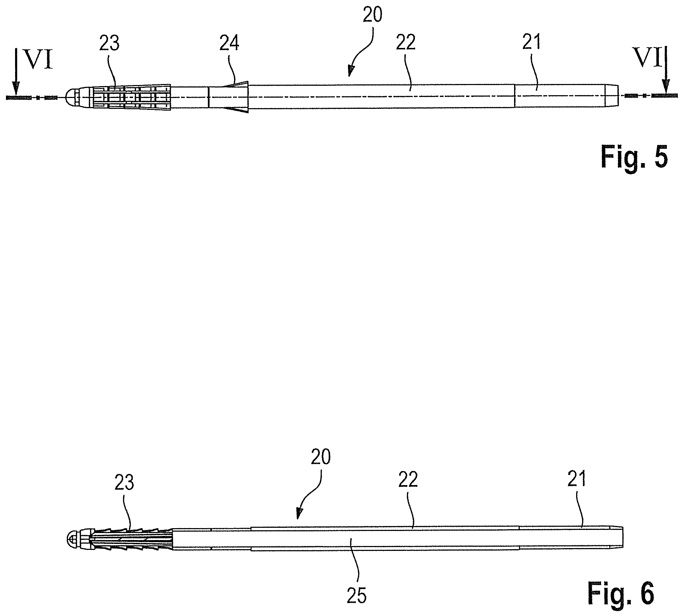

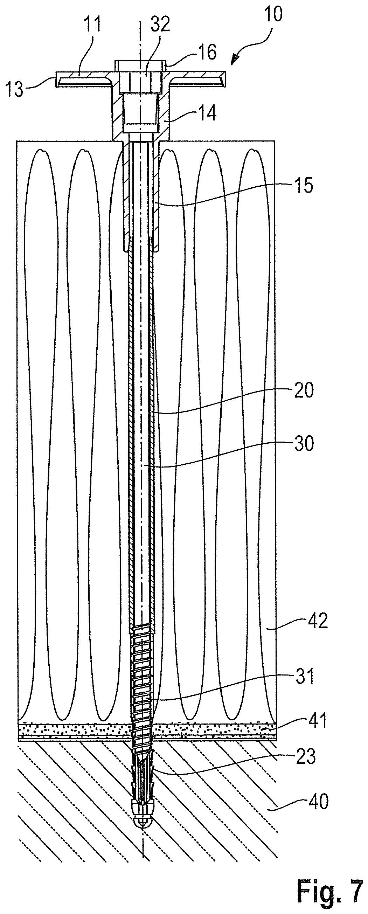

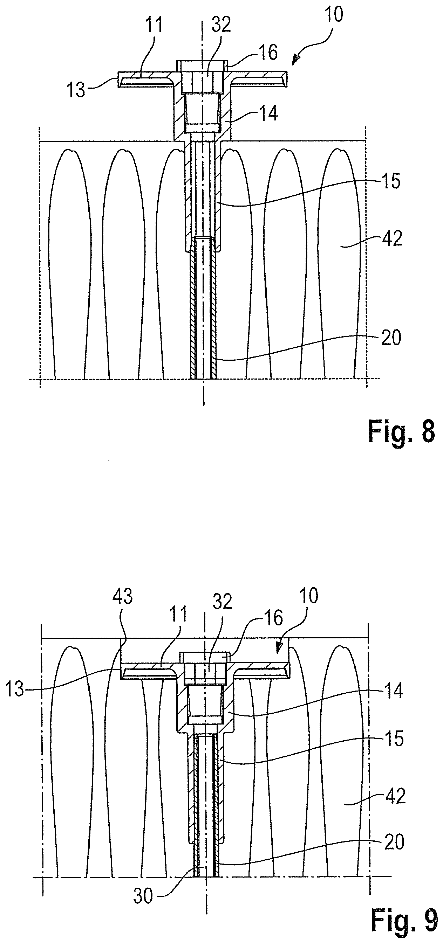

In den Fig. 5 und 6 ist die Dübelhülse 20 näher detailliert. Wie diese Darstellungen erkennen lassen, weist die Dübelhülse 20 ein Führungselement 21 und eine daran angeformte Verlängerung 22 auf. Die Verlängerung 22 trägt eine Spreizzone 23, die ebenfalls einteilig an die Verlängerung 22 angeformt ist. Die Spreizzone 23 ist in der bei Dübeln typischen Form ausgeführt. Die Dübelhülse 20 ist von einer Aufnahme 25 durchsetzt, die in den Bereich der Spreizzone 23 mündet. Fig. 5 zeigt, dass die Verlängerung 22 zwei Verankerungselemente 24 trägt. Die Verankerungselemente 24 sind dabei axial beabstandet zu der Spreizzone 23 positioniert. Jedes der Verankerungselemente 24 ist rippenförmig ausgestaltet und verjüngt sich pfeilförmig in Richtung auf das freie Ende im Bereich der Spreizzone 23. Die Dübelhülse 20 ist mit ihrem Führungselement 21 in die Führung 17 des Druckteils 10 eingesetzt. Die zylindrische Auswandung des Führungselements 21 bildet mit der zylindrischen Innenwand der Führungsaufnahme 17 eine kombinierte Dreh-Schiebelagerung. Zur Verbindung des Druckteils 10 mit der Dübelhülse 20 wird ein Spreizelement 30 verwendet. Das Spreizelement 30 ist in Form einer Schraube ausgebildet und weist einseitig ein Gewinde 31 und auf der anderen Seite einen Kopf 32 auf. Vorliegend ist der Kopf 32 von einem Kunststoffelement gebildet, das ein kopfseitiges Endstück des Spreizelements 30 umfasst. Bevorzugt ist der Kopf 32 an das kopfseitige Ende des Spreizelements 30 angespritzt. Das Spreizelement 30 kann mit seinem Gewindeschaft durch die Führungsaufnahme 17 hindurchgesteckt und in die Aufnahme 25 der Dübelhülse 20 eingesteckt werden. Im Montagezustand ist der Kopf 32 in die Steckaufnahme 18 des Druckteils 10 eingesetzt. Dabei kommt ein Außensechskant des Kopfs 32 in Eingriff mit der Verdrehsicherung 18.1. Wie Fig. 7 erkennen lässt, sitzt der Kopf 32 mit einer Schulter auf dem Anschlag 18.3 auf. Um die in Fig. 7 gezeigte Vormontagestellung zu erreichen, ist das Gewinde 31 des Spreizelements 30 ein Stück weit in die Spreizzone 23 der Dübelhülse 20 eingeschraubt. Dabei ist die Verschraubung derart gewählt, dass die Spreizzone 23 noch nicht oder nur geringfügig gespreizt ist. Der Dübel kann zur Befestigung eines Dämmstoffelements 42 an einer Unterkonstruktion 40 verwendet werden, wie dies in den Fig. 7 bis 9 veranschaulicht ist. Die Unterkonstruktion 40, bspw. ein Mauerwerk kann auf ihrer Oberseite mit einer Verbindungsschicht 41 versehen werden. Die Verbindungsschicht 41 ist dazu bestimmt und ausgelegt eine stoffschlüssige Verbindung zwischen der Unterkonstruktion 40 und dem Dämmstoffelement 42 herzustellen. Zum Setzen des Dübels wird eine Bohrung durch das Dämmstoffelement 42 und die Verbindungsschicht 41 in die Unterkonstruktion 40 eingebracht. In diese Bohrung kann der Dübel eingesteckt werden, wie dies Fig. 7 zeigt. Im Montagezustand gem. Fig. 7 verkrallen sich die Verankerungselemente 42 in der Verbindungsschicht 41. Dort legen sie die Dübelhülse 20 verdrehfest an. Nun kann ein Schraubwerkzeug mit einem Werkzeugansatz in eine Werkzeugaufnahme des Kopfs 32 eingesetzt werden. Bspw. kann in dem Kopf 32 hierzu ein Innensechskant, eine Torxaufnahme oder eine sonstige geeignete Werkzeugaufnahme vorgesehen sein. Wenn nun das Drehwerkzeug aktiviert wird, so dreht sich mit dem Drehwerkzeug simultan das Druckteil 10. Dies wird über die drehfeste Zuordnung des Kopfs 32 in der Verdrehsicherung 18.1 gewährleistet. Beim Verdrehen des Kopfs 32 und des Druckteils 10 wird das Gewinde 31 in die Spreizzone 23 eingeschraubt. Beim Einschrauben des Gewindes 31 weitet sich die Spreizzone 23 auf und sorgt für eine sichere Verankerung der Dübelhülse 20 in der Unterkonstruktion. Die gleichmäßige Rotation des Druckteils 10 gegenüber der Dübelhülse 20 wird mit der oben beschriebenen kombinierten Dreh-Schiebelagerung gewährleistet. Beim Verdrehen zieht sich das Druckteil 10 in Richtung auf die Unterkonstruktion 40. Diese Axialverschiebung wird in der kombinierten Dreh-Schiebelagerung geführt. Nach einem gewissen Verschiebeweg setzt der Druckteller 11 mit seinem Schneidelement 13 auf der Außenseite des Dämmstoffelements 42 auf. Das Schneidelement 13 schneidet sich dann in das Dämmstoffelement 42 kreisförmig ein. Der unter dem Druckteller 11 gebildete Dämmstoffbereich wird komprimiert. Sobald die in Fig. 9 gezeigte Endmontagestellung erreicht ist, wird der Montagevorgang gestoppt. Dies kann bspw. mit einem Anschlag des Drehwerkzeugs erreicht werden, der auf der Oberseite des Dämmstoffelements 42 aufsetzt. In der Endmontagestellung schlägt die Dübelhülse 20 an der Unterseite des Kopfs 32 an, wie dies Fig. 9 zeigt. Um die entstandene Aussparung 43 im Dämmstoffelement 42 zu kaschieren, kann ein Einsatzteil verwendet werden. Dieses, bspw. aus Styropor bestehende Bauteil wird passgenau in die Aussparung 43 eingesetzt. Eine Aufnahme dieses Bauteils umgreift dabei das Fixierelement 16. Dabei ist vorzugsweise eine Übermaßpassung verwendet, so dass das Bauteil verliersicher am Fixierelement 16 gehalten ist.

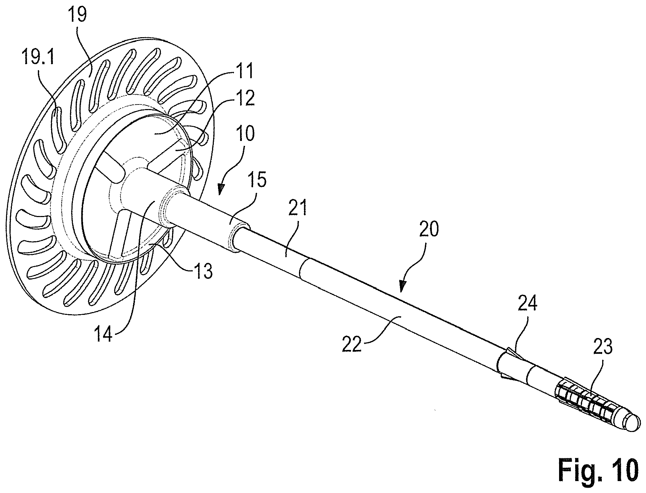

In Fig. 10 ist eine alternative Ausgestaltung eines Dübels gezeigt. Dabei ist die Detailgestaltung dieses Dübels identisch zu der Dübelgestaltung gem. den Fig. 1 bis 9. Zur Vermeidung von Wiederholungen wird nachfolgend nur auf die Unterschiede eingegangen und im Übrigen auf die vorstehenden Ausführungen verwiesen.

Das Druckteil 10 ist im Bereich des Drucktellers 11 mit einem angeformten Stützring 19 versehen. Der Stützring 19 weist durch Durchbrechungen 19.1 auf. Dieser Dübel dient zur Montage von bspw. faserförmigem Material, insbesondere von Mineralwolle. Bei der Montage stützt sich der Stützring 19 außen auf dem Mineralstoffmaterial ab.

## Patentansprüche

1. Dübel zur Montage eines Dämmstoffelements (42) an einer Unterkonstruktion (40) mit einem Druckteil (10) und einer Dübelhülse (20), wobei das Druckteil (10) mit der Dübelhülse (20) in einer Vormontagestellung mit einem Spreizelement (30) verbunden ist, wobei das Druckteil (10) einen Druckteller (11) aufweist, der mit einer Schneidvorrichtung mit einem oder mehreren Schneidelementen (13) ausgestattet ist,
wobei die Dübelhülse (20) ein Führungselement (21) und eine daran angeformte Verlängerung (22) aufweist, wobei die Verlängerung (22) eine Spreizzone (23) trägt, die ebenfalls einteilig an die Verlängerung (22) angeformt ist, und wobei ein Kopf (32) des Spreizelements (30) axial unverschiebbar und drehfest am Druckteil (10) gehalten ist,
**dadurch gekennzeichnet,**
**dass** die Dübelhülse (20) mit ihrem Führungselement (21) in eine Führung (17) des Druckteils (10) eingesetzt ist,
**dass** der Kopf (32) des Spreizelements (30) die Axialverstellung der Dübelhülse (20) begrenzt, wobei die Dübelhülse (20) in der Endmontagestellung an der Unterseite des Kopfs (32) anschlägt.

2. Dübel nach Anspruch 1,
**dadurch gekennzeichnet,**
**dass** das Druckteil (10) eine Steckaufnahme (18) mit einer Verdrehsicherung (18.1) aufweist, und
**dass** der Kopf (32) in die Steckaufnahme (18) eingesetzt und an der Verdrehsicherung (18.1) gehalten ist.

3. Dübel nach Anspruch 2,
**dadurch gekennzeichnet,**
**dass** im Bereich der Steckaufnahme (18) ein Anschlag (18.3) vorgesehen ist an dem der Kopf (32) in Achsrichtung unverschiebbar gehalten ist.

4. Dübel nach einem der Ansprüche 1 bis 3,
**dadurch gekennzeichnet,**
**dass** die Steckaufnahme (18) von einem Drucktellerschaft (14) gebildet ist, der einteilig an den Druckteller (11) angeformt ist.

5. Dübel nach einem der Ansprüche 1 bis 4,
**dadurch gekennzeichnet,**
**dass** die Schneidvorrichtung ein umlaufendes Schneidelement (13) aufweist, das im Bereich des äußeren Umfangsrands des Drucktellers angeordnet ist.

6. Dübel nach einem der Ansprüche 1 bis 5,
**dadurch gekennzeichnet,**
**dass** das Druckteil (10) eine Führung (15) aufweist, die mit dem Führungselement (21) der Dübelhülse (20) in Form einer Dreh- und Schiebelagerung zusammenarbeitet.

7. Dübel nach Anspruch 6,
**dadurch gekennzeichnet,**
**dass** die Dreh-Schiebelagerung von einem Außen- und einem Innenzylinder gebildet ist, wobei der Außenzylinder in Umfangsrichtung frei drehbar und in Achsrichtung verstellbar an dem Innenzylinder geführt ist.

8. Dübel nach einem der Ansprüche 1 bis 7,
**dadurch gekennzeichnet,**
**dass** die Verlängerung (22) axial in Richtung auf das Druckteil (10) beabstandet zu der Spreizone (23) wenigstens ein außen abstehendes Verankerungselement (24) aufweist, das derart angeordnet und ausgebildet ist, dass es zur Verankerung in einer Verbindungsschicht (41) zwischen Dämmstoffelement (42) und Unterkonstruktion (40) dient.

9. Dübel nach Anspruch 8,
**dadurch gekennzeichnet,**
**dass** das Verankerungselement (24) rippenartig ausgebildet ist und über die Außenkontur der Verlängerung (22) vorsteht.

10. Dübel nach einem der Ansprüche 8 oder 9,
**dadurch gekennzeichnet,**
**dass** das Verankerungselement (24) sich pfeilförmig in Richtung auf das freie Ende der Dübelhülse (20) hin verjüngend ausgebildet ist.

## Claims

1. A dowel for mounting an insulating element (42) on a substructure (40), comprising a pressing part (10) and a dowel sleeve (20), wherein the pressing part (10) is connected to the dowel sleeve (20) in a pre-assembly position with an expansion element (30), wherein the pressing part (10) comprises a pressing plate (11) that is equipped with a cutting device comprising one or more cutting elements (13),
wherein the dowel sleeve (20) comprises a guide element (21) and an extension (22) formed thereon, wherein the extension (22) bears an expansion zone (23) which is also integrally formed on the extension (22),
and wherein a head (32) of the expansion element (30) is held axially unmoveable and rotationally fixed on the pressing part (10),
**characterised in that**
the dowel sleeve (20) is inserted with the guide element (21) of same into a guide (17) of the pressing part (10),
**in that** the head (32) of the expansion element (30) limits the axial adjustment of the dowel sleeve (20), wherein the dowel sleeve (20) in the final assembly position abuts the underside of the head (32).

2. The dowel according to claim 1,
**characterised in that**
the pressing part (10) comprises a socket (18) having an anti-rotation device (18.1), and **in that** the head (32) is inserted in the socket (18) and held on the anti-rotation device (18.1).

3. The dowel according to claim 2,
**characterised in that**
a stop (18.3) is provided in the region of the socket (18), on which the head (32) is held unmovable in the axial direction.

4. The dowel according to any one of claims 1 to 3,
**characterised in that**
the socket (18) is composed of a pressing plate shaft (14), which is integrally formed on the pressing plate (11).

5. The dowel according to any one of claims 1 to 4,
**characterised in that**
the cutting device comprises a circumferential cutting element (13) which is arranged in a region of the outer circumferential edge of the pressing plate.

6. The dowel according to any one of claims 1 to 5,
**characterised in that**
the pressing part (10) comprises a guide (15) which engages with the guide element (21) of the dowel sleeve (20) in the form of a slide and rotate bearing.

7. The dowel according to claim 6,
**characterised in that**
the slide and rotate bearing is composed of an outer and inner cylinder, wherein the outer cylinder is freely rotatable in the circumferential direction and adjustably guided in the axial direction on the inner cylinder.

8. The dowel according to any one of claims 1 to 7,
**characterised in that**
the axial extension (22) comprises at least one externally protruding anchoring element (24) spaced apart in the axial direction from the expansion zone (23) on the pressing part (10), which is arranged and configured in such a way that it serves as an anchor in a connecting layer (41) between insulating element (42) and substructure (40).

9. The dowel according to claim 8,
**characterised in that**
the anchoring element (24) is configured rib-like and projects beyond the outer contour of the extension (22).

10. The dowel according to one of claims 8 or 9,
**characterised in that**
the anchoring element (24) is designed tapering in an arrow shape towards the free end of the dowel sleeve (20).

## Revendications

1. Cheville pour le montage d'un élément isolant (42) sur une structure formant base (40) avec une pièce de pression (10) et une douille de cheville (20), dans laquelle l'élément de pression (10) avec la douille de cheville (20) est relié, dans une position de montage préalable, avec un élément d'écartement (30), dans laquelle la pièce de pression (10) présente une rondelle de pression (11), qui est pourvue d'un dispositif de coupe avec un ou plusieurs éléments de coupe (13)
dans laquelle la douille de cheville (20) présente un élément de guidage (21) et une extension (22) formée sur celui-ci, dans laquelle l'extension (22) porte une zone d'expansion (23), qui est formée également d'un seul tenant sur l'extension (22) et dans laquelle une tête (32) de l'élément d'écartement (30) est maintenue de façon à ne pas coulisser au plan axial et solidaire en rotation sur la pièce de pression (10),
**caractérisée en ce**
**que** la douille de cheville (20) est insérée, avec son élément de guidage (21) dans un guide (17) de la pièce de pression (10),
en ce que la tête (32) de l'élément d'écartement (20) limite le réglage axial de la douille de cheville (20), la douille de cheville (20) venant en butée, dans la position de montage final, au niveau du côté inférieur de la tête (32).

2. Cheville selon la revendication 1,
**caractérisée en ce**
**que** la pièce de pression (10) présente un logement d'enfichage (18) avec un système anti-rotation (18.1) et
en ce que la tête (32) est insérée dans le logement d'enfichage (18) et maintenue sur le système anti-rotation (18.1).

3. Cheville selon la revendication 2,
**caractérisée en ce**
**que**, dans la zone du logement d'enfichage (18), une butée (18.3) est prévue sur laquelle la tête (32) est maintenue sans pouvoir coulisser dans la direction axiale.

4. Cheville selon une des revendications 1 à 3,
**caractérisée en ce**
**que** le logement d'enfichage (18) est formé à partir d'un arbre de rondelle de pression (14), qui est formé d'un seul tenant sur la rondelle de pression (11).

5. Cheville selon une des revendications 1 à 4,
**caractérisée en ce**
**que** le dispositif de coupe présente un élément de coupe tournant (13), qui est disposé dans la zone du bord périphérique extérieur de la rondelle de pression.

6. Cheville selon une des revendications 1 à 5,
**caractérisée en ce**
**que** la pièce de pression (10) présente un guide (15), qui collabore avec l'élément de guidage (21) de la douille de cheville (20) sous la forme d'un montage tournant et coulissant.

7. Cheville selon la revendication 6,
**caractérisée en ce**
**que** le montage tournant et coulissant est formé à partir d'un cylindre externe et d'un cylindre interne, le cylindre externe étant guidé librement de façon rotative dans la direction périphérique et de façon réglable dans la direction axiale par rapport au cylindre interne.

8. Cheville selon une des revendications 1 à 7,
**caractérisée en ce**
**que** l'extension (22) présente au moins un élément d'ancrage (24) en saillie vers l'extérieur au plan axial dans la direction de la pièce de pression (10) espacé de la zone d'expansion (23), qui est formé et disposé de sorte qu'il sert à l'ancrage, dans une couche de liaison (41), entre l'élément isolant (42) et la structure formant base (40).

9. Cheville selon la revendication 8,
**caractérisée en ce**
**que** l'élément d'ancrage (24) est formé comme une nervure et dépasse au-dessus du contour externe de l'extension (22).

10. Cheville selon une des revendications 8 ou 9,
**caractérisée en ce**
**que** l'élément d'ancrage (24) est formé en se rétrécissant en forme de flèche en direction de l'extrémité libre de la douille de cheville (20).
